# EUROPEAN PATENT APPLICATION

(11) **EP 1 349 093 A1**
(43) Date of publication of application: **01.10.2003**
(21) Application number: 00987795.2
(22) Date of filing: 28.12.2000
(51) Int. Cl.: G06F 17/60

(54) **ELECTRONIC COMMERCE SYSTEM**

(71) Applicant: Kabushiki Kaisha Toshiba, Tokyo 105-8001 (JP)
(72) Inventor: SUZUKI, Takao, Minato-ku, tokyo 105-8001 (JP); HOSHINO, Masayuki, Minato-ku, tokyo 105-8001 (JP)
(74) Representative: Granleese, Rhian Jane
(86) International application number: JP0009401
(87) International publication number: WO02054304

(57) **Abstract**

A server 10 measures the brightness, hue, and color saturation of the image file information Y with a standard value Z1, when the image file information Y is included in the information which a seller 2 uploaded. When brightness, hue, and color saturation do not meet the standard value Z1, the server 10 compares a distributed value W and standard value Z2 of a pixel in the part of the image file information. When all comparison does not meet the standard value Z2, the server 10 asks a seller 2 that the image file information Y should be replaced. Therefore, because the situation of an image can be automatically judged before the beginning of electronic commerce, it is possible to avoid problems caused by the image file information Y after an electronic commerce start.

## Description

### BACKGROUND OF THE INVENTION

### Field of the Invention

This invention relates to an electronic commerce (EC) system.

### Description of Related Art

In recent years, electronic commerce (EC) is widely used as one style of commercial transactions. Especially, by using the Internet which has become popular, a buyer can buy a variety of goods without meeting with a seller.

The auction and the like using the Internet is known as one of the electronic commerce. Because the Internet auction can provide transaction in cheap goods by mainly consumer-to-consumer basis, the borderless electronic commerce is widely used currently.

Moreover, in various commercial transactions, transaction of goods is performed Lhrough the network server. A network server is controlled by a server administrator, who is the agent of electronic commerce, and is operated so that electronic commerce is made appropriately.

One of the problems in electronic commerce is that a buyer cannot see and check the goods which he/she wishes to have directly. Therefore, a seller tries to prepare image files of goods as various electronic format (".gif", ".jpg", ".bmp", etc.), and tries to inform the buyer the exact aspects of goods by uploading these image files to a network server.

However, when preparing image file information, a seller uses a digital still camera, a scanner, the image file information may become indistinct by mechanical and optical influence. Moreover, even if the seller prepares the image file information on overall of goods, the buyer may pay his/her attention to the details of the goods.

Thus, there is a difference how to consider image file information between a seller and a buyer. Generally, a buyer tends to need clearer image file information than a seller. Therefore, a certain criterion was required for the image file information uploaded to the network server.

The object of the present invention is to provide an electronic commerce system which can recognize the condition of image files uploaded to network server, and thereby solve the problem in the electronic commerce.

### SUMMARY OF THE INVENTION

The present invention realizes the object mentioned above, the present invention is an electronic commerce system for providing transaction in goods on communication network wherein terminal is connected each other through communication line, comprising: an information acquisition unit being configured to receive the information on the seller's goods, image sampling unit being configured to extract the image file information included in the information of the goods; an image analyzing unit being configured to analyze the brightness , hue, and color saturation of the image file information; and a notice unit being configured to notify the seller of the analysis result by the image analyzing unit.

In the electronic commerce system of the present invention, network server analyzes the uploaded image and judges the condition. Concretely, this system calculates the brightness, hue, and color saturation of the uploaded image, and when all of them are more than threshold values, that upload is automatically judged to be valid. Thus, the problem with buyers can be reduced by analyzing and judging the condition of image files on the network server.

Moreover, another invention is an electronic commerce system for trading in goods on communication network wherein terminal is connected each other through communication line, comprising: the transmission request unit being configured to transmit the request signal for downloading the information on the goods on electronic commerce for every certain period, the display being configured to display the information on the goods obtained by the transmission request unit on a position on a window.

By the second invention, goods information can be downloaded and the acquired information can be periodically displayed on the any position on a display, time course of goods information can always be recognized visually, time transition of electronic commerce, such as an auction, can be understood sensuously.

### BRIEF DESCRIPTION OF THE DRAWINGS

Fig. 1 is a conceptual schematic diagram illustrating an electronic commerce system of the present invention.
Fig. 2 is a flow chart illustrating the flow of the procedure in the electronic commerce system of the present invention.
Fig. 3 is a flow chart illustrating the flow of the procedure in the electronic commerce system of the present invention.
Fig. 4 is a diagram illustrating an example of the information input screen of the goods X in the electronic commerce.
Fig. 5 is a figure showing an example of the screen displayed when the brightness and color saturation of the image file information Y do not meet a certain level required.
Fig. 6 is a diagram illustrating an example of the screen in the case of displaying the information concerning the electronic commerce on the background of PC.
Fig. 7 is a diagram illustrating an example of the screen in the case of displaying the information concerning the electronic commerce on the background of PC.
Fig. 8 is a diagram illustrating an example of the screen in the case of displaying the information concerning the electronic commerce on the background of PC.

### DETAILED DESCRIPTION OF THE EMBODIMENTS

Hereinafter, the present invention will be explained with referring to the accompanying drawings.

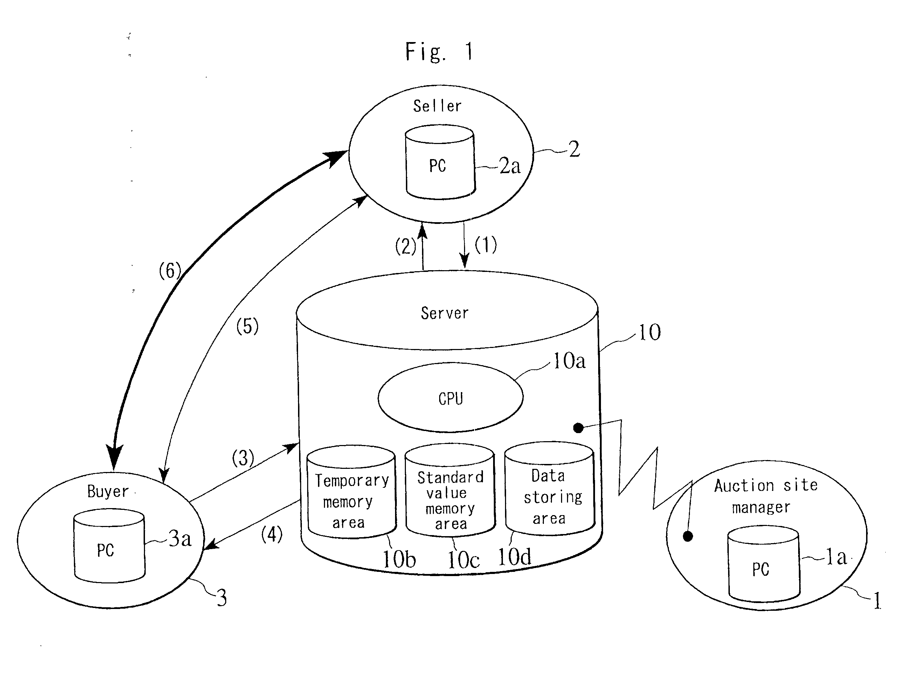

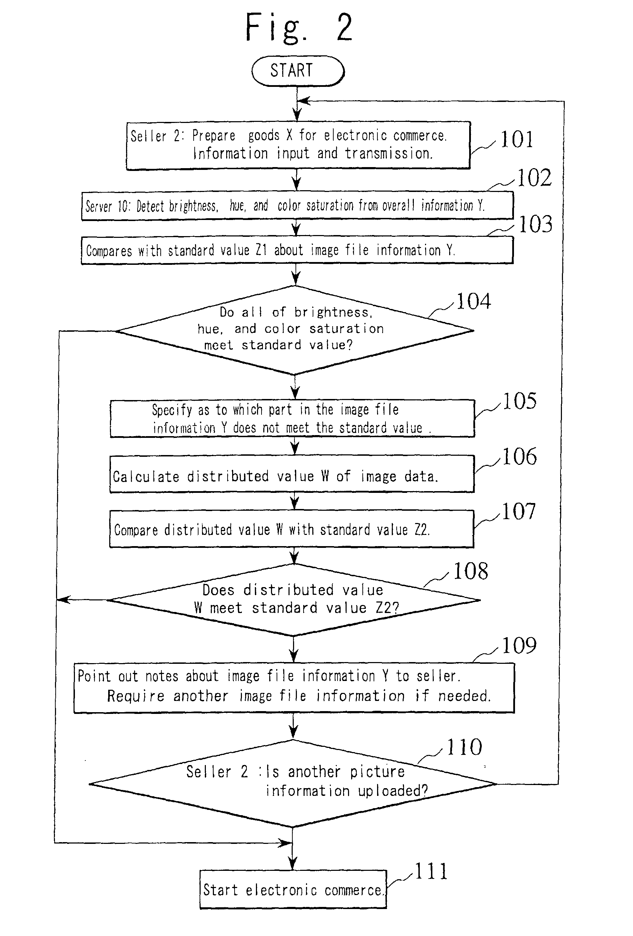

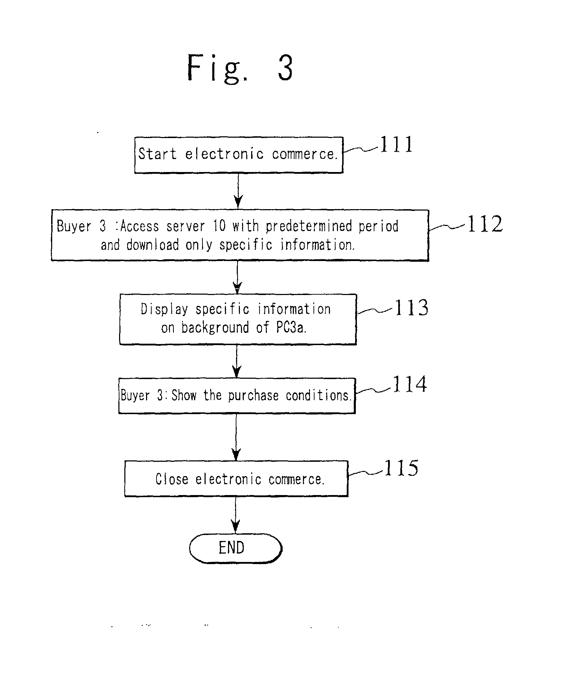

Fig. 1 is a conceptual schematic diagram showing the flow of the commercial transaction in the electronic commerce system according to an embodiment of the present invention. In the commercial transaction in this embodiment, there are a seller 2, a buyer 3, and an auction site manager 1 as a server administrator involved, and carry out information exchanges through a network server 10. Moreover, Fig. 2 and Fig. 3 are flow chart showing the flow of the procedure in this electronic commerce system according to the embodiment of the present invention.

The auction site manager 1 builds a system of the electronic commerce (a shopping mall site, an auction site, and the like) into server 10, and runs the electronic commerce by using the server 10. To this server 10, anyone including the seller 2 and the buyer 3 can access from all over the world through the Internet, and the environment such as the shopping mall site and the auction site is provided for them to use.

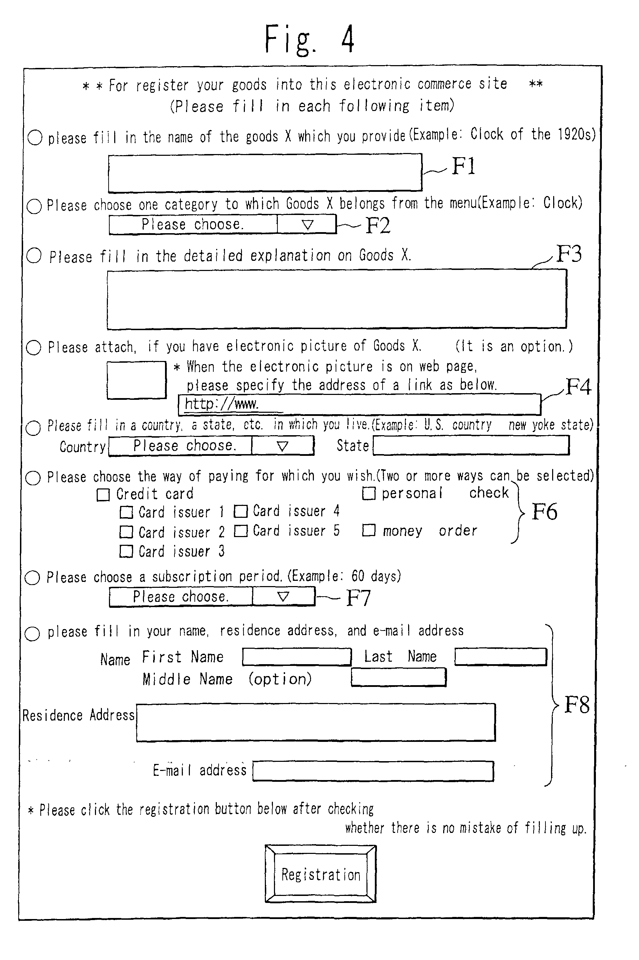

First, the seller 2 prepares Goods X which he/she wants to sell, and uploads the information on Goods X to the server 10 from his/her computer (PC) 2a (information flow (1) and Step 101). The display of seller 2's computer 2a displays the input window as shown in Fig. 4 from the server 10. The seller 2 inputs the information on Goods X by using this window.

As the information on Goods x, "seller's personal information (name, residence address, e-mail address, and the like)", "quantity", "the price of the minimum successful bid (reserve)" are included for an auction site, and these information are transmitted to the server 10 by typing in the input forms F1-F8 displayed on the window, or by selection operations in this window.

In some auction sites, there is a case where the auction site manager 1 requires to input "seller's personal information" at the time of member registration. In such a case, an identification code like "Member ID" has already given to the seller 2. Therefore, the seller 2 can input the identification code instead of "seller's personal information" on the window shown in Fig. 4.

For indicating the condition of Goods X more clearly to the buyer 3, or for emphasizing existence of Goods X, the seller 2 can also input detailed descriptions and various electronic information into input form F3 or F4. Here "detailed description" means specific explanation by words on the condition of Goods X, and "various electronic information" includes the image file information and the like of the goods X taken by a digital still camera or a scanner.

In addition, it is desirable that such input window is provided from the server 10 according to a demand of the seller 2 so that the information on Goods X can be added or corrected after the auction started. This is for providing more detailed information on Goods X for the buyer 3 who got interested in Goods X.

As mentioned above, the various information transmitted to the network server 10 through the window shown in Fig. 4 is stored temporarily in a temporary memory area 10b in the network server 10. And in network server 10, CPU 10a analyzes the uploaded image file information from the seller 2 in the following procedures.

First, the image file information Y is extracted from the various uploaded information, and brightness, color saturation and the like are calculated from the overall image file information Y (Step 102). Here "brightness" is an attribute meaning the degree in which an object reflects, "hue" is an attribute meaning the base of color, such as red, yellow, and green, and, "color saturation" is an attribute meaning the difference from the noncoloration having equivalent brightness.

These "brightness", "hue", and "color saturation" are called "three attributes of color". A certain standard value Z1 is set about each of the three attributes of color, and the uploaded image file information Y is checked whether it meets or exceeds the standard value Z1 as a whole (Steps 103 and 104). Generally, it is said that higher the brightness, closer to white, and higher the color saturation, vivider the brilliantness. As for hue, having much colors tend to be regarded flashy. The standard value Z1 is decided and stored in a sLandard value memory area 10c by the auction site manager 1, and is compared with the brightness, hue, and color saturation of the image file information Y by the CPU 10a.

The condition to setup the standard value Z1 of each of these attributes of color can be made by considering to the field, size, and form of the goods handled in the commercial transactions. The exemplary setting method of the standard value is written in "Electrical Engineering Handbook (first edition), (corporation electricity meeting, issued in April 10 1979)" piece [28th] chapter 1.4 "the display of color and measurement" (PP1528-1529) of or piece [ 34th ] chapter 1.3 "vision" (PP1886-1887).

After comparing the overall image file information Y with the standard value Z1, and all the brightness, hues and color saturations meet the standard value Z1, the image file information Y is moved and stored into a goods data storing area 10d, to use in electronic commerce (Step 111).

On the other hand, if none of brightness, nor hues, and color saturations meet the standard value Z1, it is specified as to which part in the image file information Y does not meet the standard value Z1 by calculation (Step 105) . That is, the image file information Y is analyzed partially and only the part which did not meet the condition is analyzed again. After specifying the part which did not meet the condition, the distributed value W of pixel data in the part is calculated (Step 106).

The distributed value W is compared with another standard value Z2 prepared previously, and judged (Step 107,108). Generally, it is said that higher the distributed value larger the difference of the shade of color. The standard value Z2 as well as the standard value Z1 is stored in the standard value memory area 10c as a value previously determined by the auction site manager 1, and is compared with the distributed value W by CPU 10a.

Moreover, by comparing the distributed value W with the standard value Z2/ and all the brightness, hues and color saturations meet the standard value Z2,the image file information Y is moved and stored into the goods data storing area 10d to use in electronic commerce (Step 111).

Thus, in the present invention, judging is made by using the standard value Z1 and the standard value Z2. When the image file information Y is found to meet one of the standard values Z1 and Z2, the upload of the image file information Y by the seller 2 is allowed automatically.

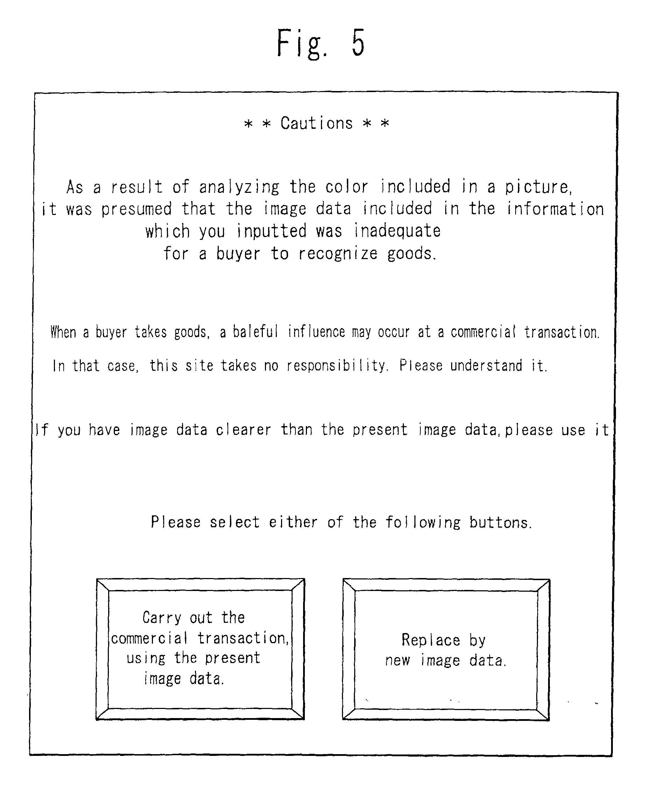

On the other hand, in a case where the image file information Y does not meet any of the standard values Z1 and Z2, the window shown in Fig. 5 is displayed to the seller 2 concerning the upload of the image file information Y.

In Fig. 5, cautions are indicated such that the uploaded image file information Y may not be suitable to the electronic commerce which the auction site manager 1 intends, and that if a problem occurs during the electronic commerce caused by the image file information, the auction site manager 1 will not have any responsibility. At the same time, an opportunity to upload another image file is given to the seller 2 for continuing the transactions of Goods X. When another image file is uploaded, process returns to Step 101 and analysis of the uploaded image is performed again.

On the other hand, when the seller 2 shows the intention of continuing and using the image file information cautioned, the upload of the image file information Y is accepted. And the electronic commerce is started with the image file which satisfied either the standard value Z1 or the standard value Z2 (Step 111).

Thus, by using the flow of the electronic commerce shown in Fig. 2, the network server 10 analyzes the uploaded image file information Y, and judge the condition. Thus, by a way of analyzing and judging condition of the image file information Y using the network server 10, the buyer 3 can have less problem as possible.

Now, the electronic commerce on Goods X started through such process can be referred to by anyone through the network, and many buyers 3 will get interested in Goods X with course of time. In the case of common commercial transactions, the buyer 3 considers quantity of goods X purchase, and in, to the case of the Internet auction, the buyer 3 considers the bidding price of Goods X.

Here, when the electronic commerce is the Internet auction, the highest price of the auction changes with course of time. One of the funs of the Internet auction is that the situation of the electronic commerce changes every moment.

Therefore, it is serviceable in a viewpoint of electronic commerce to indicate the temporal course to an auction end by the window at the buyer's PC 3a. It is inefficient that the buyer 3, on the other hand, always supervises the information which changes every moment through a browser from the PC 3a. That is, because it is unpredictable when update of the information by others is performed, it is inefficient in terms of time. Moreover, it is inefficient in money to continue connecting the PC 3a to a network all the time.

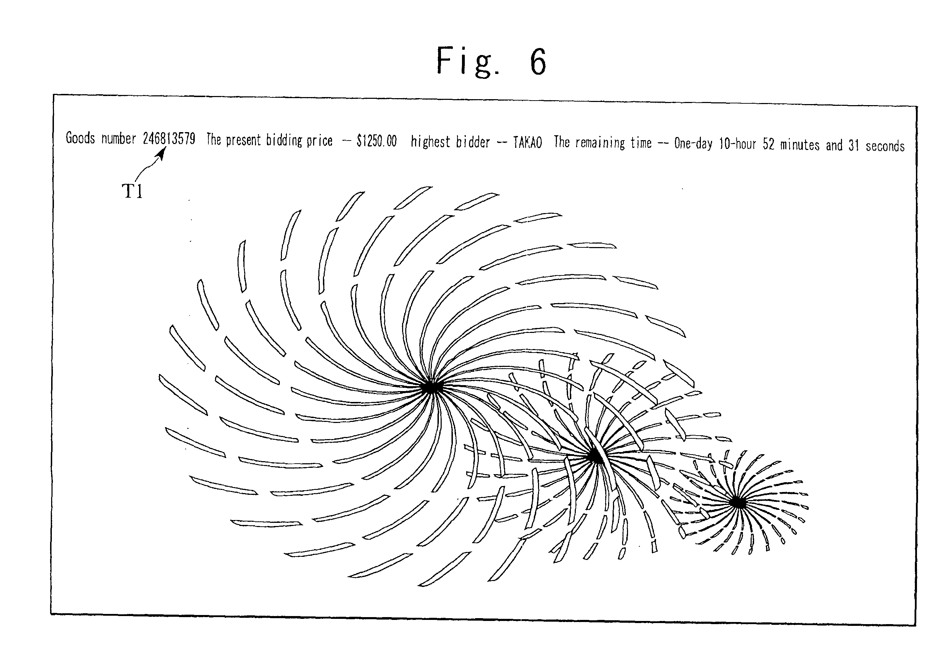

Therefore, at the Internet auction, in order to download periodically only the information (specific information) whose updating frequency is relatively high, at intervals of specific time, a request signal is transmitted to the server 10 (Step 112), as shown in Figs. 6 to 8, and the downloaded information is displayed as a background (so-called "wallpaper") of the PC 3a, or as a part of the screen saver (Step 113).

The frequency of connecting the PC 3a to the network is controlled every 30 - 100 minutes, for example in cases where the auction end is closing; the frequency is made into every 5 to 10 minutes step by step as the auction end approaches. Just before an auction close, it is controlled to be continuous connection with the network.

The information whose updating frequency is relatively high is selected as specific information which should be downloaded from an auction site, for example, the price of the current highest bid, the person bidding the highest price, time (the remaining time); Of course, it is possible to select at least one of those information.

Fig. 6 shows the first example which displays the downloaded information on the window of the PC 3a. As shown in Fig. 6, the way of displaying information near the upper part of the screen saver as a word line T1 of characters scrolled by the horizontal direction automatically can be applied.

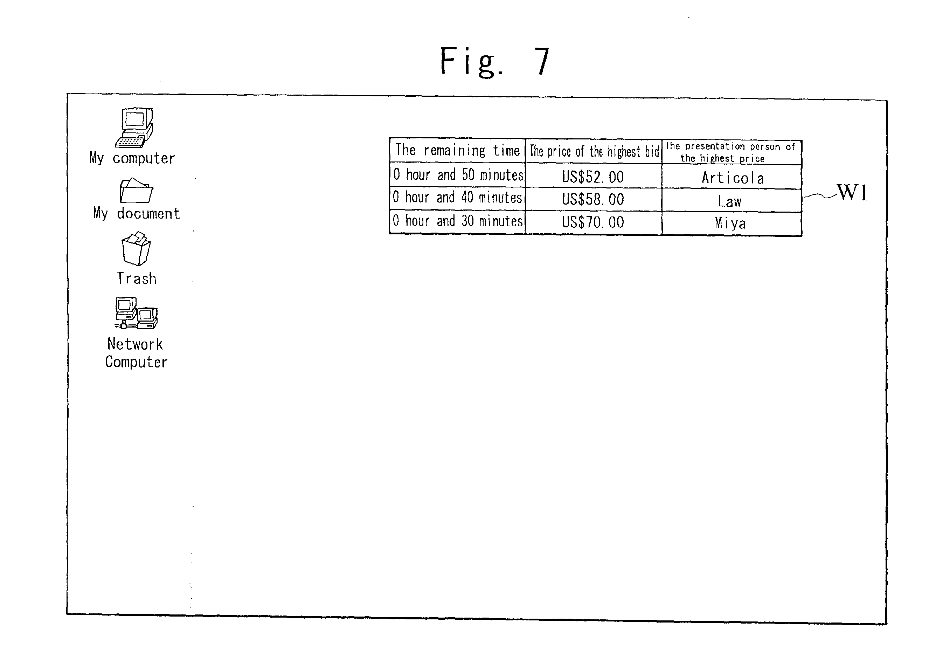

Fig. 7 shows the second example which displays the downloaded information on the window of the PC 3a. In Fig. 7, the situation of the change of the specific information with the course of time is displayed in the form of a list W1 on a part of the PC 3a. As shown in this drawing, by recognizing the temporal change of the specific information, it is possible to understand the temporal transition of the auction sensuously.

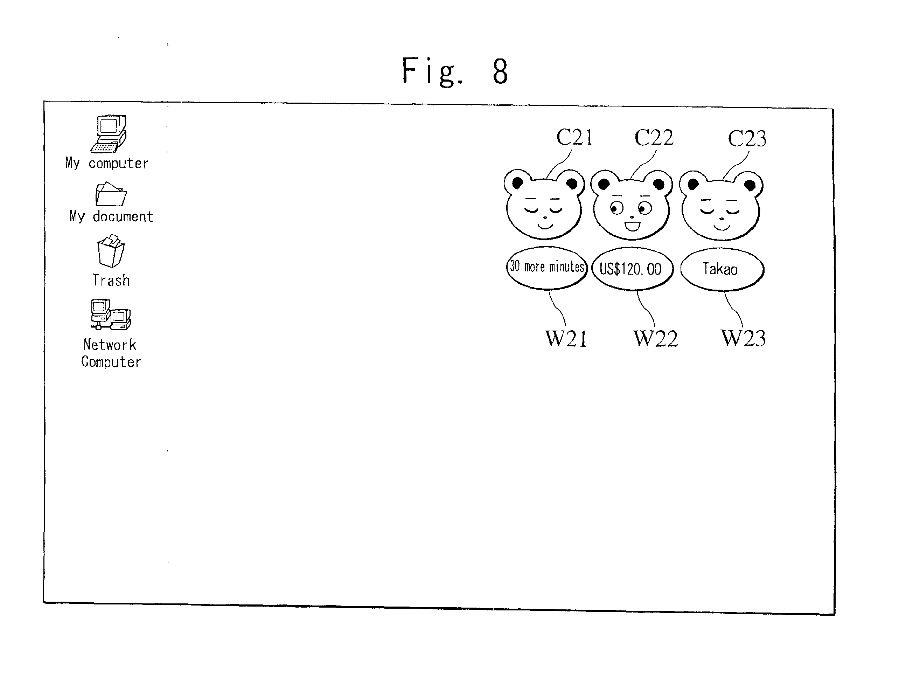

Fig. 8 shows the third example which displays the downloaded information on the window of the PC 3a. Mascots C21 to C23 are displayed to each of the windows W21 to W23 to display the specific information.

In cases where the specific information is changed expressions and forms of the mascots C21 to C23 and style corresponding to the specific information are changed. Thereby, change of specific information can be recognized visually at ease.

In order to indicate that the specific information is updated, there are ways other than that the buyer 3 is made to recognize by changing signs, such as the above-mentioned numerals or mascots. For example, it is possible to use the method of using voice or sound and changing the colors of the specific part on a window. Moreover, the position on the window of the display can be set up arbitrarily to indicate renewal of these specification information. Note that it should be arranged so that the position of the task bar and icons of OS may be avoided. As shown in Fig. 6, in cases where the information is displayed on a part of the screen saver, the information can be temporarily out of sight from the window by operating the keyboard and mouse which were connected to the PC 3a.

By using such method, a user can participate in the electronic commerce, realizing both the reduction of the load of network connection and the acquisition of the renewal information of real time at once.

In addition, the electronic commerce performed at Steps 112 and 113 shown in Fig. 3 can be realized by software installable in the buyer's PC 3a. Therefore, the network connection interval for downloading information, the kind of information to be downloaded, and the displaying method on a window can be changed by using the setup menu of the installed software.

Thus, in cases where the buyer 3 decides to purchase or bid based on the information displayed on the window, the buyer 3 selects or types to send "buyer's personal information (name, residence address, e-mail address, and the like)", "good name", "quantity or bidding amount (price of a bid)", "payment method" to the server 10 (flow (3) and Step 114). Here, in the case where the buyer 3 has already finished member registration, it can replace "buyer's personal information" with an identification code such as "Member ID" can also be inputted.

The buyer 3 who presented the highest bid the highest purchase conditions by the auction term specified by the seller 2", acquires the right to purchase Goods X. The buyer 3 who acquired the right of purchase receives a notice from the server 10 that the buyer 3 is the successful bidder. Moreover, the server 10 performs the same notice to the seller 2 similarly (information flow (2), (4)).

Then, the seller 2 and the buyer 3 communicate by e-mail to each other, and confirm the name, the residence address and the like(information flow (5)). Then, the buyer 3, sends money to the seller 2 and the seller 2 sends Goods X to the buyer 3 (information flow (6)). Thus, a series of sequence of the electronic commerce is finished (Step 115).

As mentioned above, according to the present invention, a network server analyzes and judges the condition of image file, it is possible to reduce problems for a buyer as much as possible.

Moreover, it is possible for a buyer to participate with electronic commerce efficiently in temporal and economical, and can to obtain goods wishing to have.

In present invention, as explained above, because network server analyzes and judges the condition of image file, it is possible to reduce problems for a buyer as much as possible.

## Claims

1. An electronic commerce system for providing transactions in goods on communication network with terminal is connected each other through communication line comprising:
an information acquisition unit being configured to receive the information on the seller's goods;
an image sampling unit being configured to extract out the image file information included in the information of the goods;
an image analyzing unit being configured to analyze brightness , hue, and color saturation of the image file information; and
a notice unit being configured to notify the seller of the analysis result by the image analyzing unit.

2. The electronic commerce system as claimed in claim 1 wherein the image analyzing unit measures brightness, hue, and color saturation with a certain value.

3. The electronic commerce system as claimed in claim 1 wherein the image analyzing unit specifies a part within the image file information, and compares brightness, hue, and color saturation with a certain value a plurality of times.

4. The electronic commerce system as claimed in claim 1 wherein the image analyzing unit performs decision processing for whether the image file information is suitable for electronic commerce.

5. The electronic commerce system as claimed in claim 1 wherein the notice unit makes the seller determine whether or not to use the image file information for. electronic commerce.

6. The electronic commerce system as claimed in claim 1 wherein the notice unit gives the seller an opportunity to replace the image file information to another image file information.

7. An electronic commerce system for providing transaction in goods on communication network wherein terminal is connected each other through communication line, comprising:
a transmission request unit being configured to transmit the request signal for downloading the information on the goods on electronic commerce for every certain period; and
a display being configured to display the information on the goods obtained by the transmission request unit on a position on a window.

8. The electronic commerce system as claimed in claim 7 wherein at least one of the information regarding the price of the highest bid, the highest price presentation person, and bid time of goods is included in the request signal which the transmission request unit transmits.

9. The electronic commerce system as claimed in claim 7 wherein the display unit displays information on the background of the window.

10. The electronic commerce system as claimed in claim 7 wherein the display unit displays information as a part of a screen saver.
